(19) Europäisches Patentamt
European Patent Office
Office européen des brevets

(11) **EP 3 206 190 A1**

(12) **EUROPEAN PATENT APPLICATION**

(43) Date of publication:
**16.08.2017 Bulletin 2017/33**

(51) Int Cl.:
*G06T 15/06* (2011.01)

(21) Application number: **17154668.2**

(22) Date of filing: **03.02.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **15.02.2016 EP 16305169**

(71) Applicant: **Thomson Licensing**
**92130 Issy-les-Moulineaux (FR)**

(72) Inventors:
• **LECOCQ, PASCAL**
**35576 CESSON SEVIGNE CEDEX (FR)**
• **DUFAY, ARTHUR**
**35576 CESSON SEVIGNE CEDEX (FR)**
• **MARVIE, JEAN-EUDES**
**35576 CESSON SEVIGNE CEDEX (FR)**

(74) Representative: **Merlet, Hugues**
**TECHNICOLOR**
**1-5, rue Jeanne d'Arc**
**92130 Issy-les-Moulineaux (FR)**

(54) **DEVICE AND PROCESS FOR IMPROVING EFFICIENCY OF IMAGE RENDERING**

(57) A method and apparatus for rendering a graphics image comprising a plurality of pixels, the method comprising, and the apparatus being configured to perform the following operations: generating a first sequence of first samples, said first sequence being identical for each pixel of a set of pixels of said graphics image; calculating an interval as a function of a parameter representative of discrepancy of said first sequence; for said each pixel, applying a shift to said first samples to obtain a second sequence of second samples, the shift being selected in said interval, said shift being different for at least a part of the pixels of said set; rendering said graphics image by using said second samples.

Generating first samples — 91

Calculating an interval — 92

Obtaining second samples — 93

Rendering the graphics image — 94

**Fig 9**

**Description**

**1. Technical domain**

The present disclosure relates to the domain of image generation, or rendering, in the representation of three-dimensional scenes, and concerns more especially the efficiency of processing for rendering realistic lighting effects, for example for indirect lighting. It pertains to Computer Generated Image (CGI or 3D-CGI).

**2. Background**

This section is intended to introduce the reader to various aspects of art, which may be related to various aspects of the present disclosure that are described and/or claimed below. This discussion is believed to be helpful in providing the reader with background information to facilitate a better understanding of the various aspects of the present invention. Accordingly, it should be understood that these statements are to be read in this light, and not as admissions of prior art.

The rendering of realistic lighting effects in movie production requires proper simulation of full light exchanges in a scene by taking into account all direct and indirect lighting contributions. As known in the art, the challenging task involves solving the rendering equation representing the integral of all lighting contributions reaching a surface that are scattered in all directions (e.g., see K. J. T, "The Rendering Equation," ACM SIGGRAPH Computer Graphics, no. 143-150, 1986). Solving the rendering equation is not trivial, no analytic solution exists. Stochastic ray tracing methods such as Path tracing or Photon Mapping are usually employed to fully or partially solve the equation (e.g., see K. J. T, "The Rendering Equation," ACM SIGGRAPH Computer Graphics, no. 143-150, 1986; and H. W. Jensen, "Global Illumination using Photon Maps," Proceedings of the Seventh Eurographics Workshop on Rendering, pp. 21-30, 1996).

These ray tracing methods require many ray intersection evaluations with exponential complexity involving many hours of computation on many core CPUs (central processing units). With recent advances in massive parallel GPUs (graphic processing units) new computing solutions have emerged allowing reduced computation time and some interactive rendering with some quality tradeoff. They rely on dedicated spatial acceleration structures such as BVH (bounding volume hierarchy) and LBVH (linear bounding volume hierarchy) that maps very well on GPU memory with good locality of data.

More specifically, efficient GPUs for ray-tracing applications rely on the SIMD (Single Instruction Multiple Data) parallel programming model (the term SIMD being referred to here as covering SIMT as well, for Single Instruction Multiple Thread). Typically, then, a GPU instantiates a kernel program such as a ray intersection, on a grid of parallel thread blocks. Each thread block is assigned to a multiprocessor that concurrently execute the same kernel in smaller blocks called warps. Threads within a block have access to a shared first-level cache memory, or L1 cache, while threads across thread blocks are sharing a slightly slower shared second-level cache memory, or L2 cache.

In the frame of ray tracing, the processing of pixels in images is grouped by means of thread blocks, allowing multiple rays to be evaluated in parallel across pixels of the image utilizing the L1 cache and L2 cache. However, when a thread requests data from a texture, or a buffer, not available in the associated L1 cache or L2 cache (a cache miss), the GPU must then take the time to prefetch a new cache block, thereby again making local memory data available for other threads in the same block (L1 cache) or the same warp (L2 cache). As such, locality of data accessed by a group of threads in a block or in a warp therefore appears key for good data bandwidth. In other words, scattered data accesses, i.e., severe cache misses, lead to poor performance.

In particular, stochastic GPU ray tracing techniques commonly used to solve the rendering equation partition a camera image into a block of threads, where each thread computes the illumination of a pixel of the image by Monte Carlo integration. The Monte Carlo integration consists in tracing secondary rays randomly distributed on the hemisphere surrounding a point on a surface. However, parallel tracing of unorganized rays in a block of threads leads to severe cache misses due to scattered BVH data access. Since each ray/thread in a block can access a random space region, concurrent threads can't take advantage of prefetching (caching) due to random BVH node fetches. This situation represents a serious bottleneck with direct impact on rendering performances.

**3. Summary**

The present disclosure relates to an apparatus configured and/or adapted to render a graphics image comprising a plurality of pixels, the apparatus comprising at least one processor associated with a memory configured to:

- generate a first sequence of first samples, said first sequence being identical for each pixel of a set of pixels of said graphics image;
- for said each pixel, apply a shift to said first samples to obtain a second sequence of second samples, the shift being selected in an interval that is as a function of a parameter representative of discrepancy of said first sequence, said shift being different for at least a part of the pixels of said set;
- render said graphics image by using said second samples.

According to a characteristic, the at least one processor is further configured to calculate an illumination value for said each pixel by tracing rays originating said each pixel and passing through said second samples associated with said each pixel.

According to a particular characteristic, said first samples have a plurality of dimensions comprising a first dimension and at least one second dimension, said shift having said plurality of dimensions, a first shift value according to the first dimension and at least one second shift value according to the at least one second dimension, the first shift value being different from the at least one second shift value.

According to a specific characteristic, the number of dimensions is equal to a number of dimensions of an integration domain used to calculate said illumination value.

According to another characteristic, said at least one processor is further configured to execute a path-tracing algorithm implementing the Monte-Carlo integration method.

According to another characteristic, said at least one processor is further configured to perform a space filling curve ordering to said first samples.

The present disclosure also relates to a method of rendering a graphics image comprising a plurality of pixels, the method comprising the operations performed in the abovementioned apparatus.

The present disclosure also relates to a computer program product comprising instructions of program code for executing operations of the method of rendering a graphics image comprising a plurality of pixels, when the program is executed on a computing device.

The present disclosure also relates to a (non-transitory) processor readable medium having stored therein instructions for causing a processor to perform at least an operation of the method of rendering a graphics image comprising a plurality of pixels.

The present disclosure also related to a communication terminal comprising a processing unit configured to implement the method of rendering a graphics image comprising a plurality of pixels.

### 4. List of figures

The present disclosure will be better understood, and other specific features and advantages will emerge upon reading the following description, the description making reference to the annexed drawings wherein:

- figure 1 diagrammatically shows a graphics processing apparatus comprising the features of a graphics processing device according to a particular embodiment of the present principles;
- figure 2 is a block diagram of a GPU included in the graphics processing apparatus of figure 1, itself comprising the features of a graphics processing device according to a particular embodiment of the present principles;
- figure 3 represents the parallel computing and memory management functionalities of the GPUs of the graphics processing apparatus of figure 1, notably the GPU of figure 2, according to a particular embodiment of the present principles;
- figure 4 illustrates the scattering of secondary rays in a scene, representative of a situation to be processed by the graphics processing apparatus of figure 1, according to a particular embodiment of the present principles;
- figures 5, 6 and 7 show the generation of samples for the tracing of rays in a scene, with the use of the graphics processing apparatus of figure 1, according to a particular embodiment of the present principles;
- figure 8 shows the parallel processing of scattered secondary rays in a scene, with the use of the graphics processing apparatus of figure 1, according to a particular embodiment of the present principles;
- figure 9 is a flow chart showing a particular execution mode of the method of rendering a graphics image, with the use of the graphics processing apparatus of figure 1, according to a particular embodiment of the present principles.

### 5. Detailed description of embodiments

The subject matter is now described with reference to the drawings, wherein like reference numerals are used to refer to like elements throughout. In the following description, for purposes of explanation, numerous specific details are set forth in order to provide a thorough understanding of the subject matter. It can be evident, however, that subject matter embodiments can be practiced without these specific details.

Other than the present principles, techniques used in stochastic ray tracing, e.g., the rendering equation, Path tracing, Photon tracing, Lambert's law and Monte Carlo techniques are well known and not described herein (e.g., see K. J. T, "The Rendering Equation," ACM SIGGRAPH Computer Graphics, no. 143-150, 1986; and H. W. Jensen, "Global Illumination using Photon Maps," Proceedings of the Seventh Eurographics Workshop on Rendering, pp. 21-30, 1996). Further, other than the inventive concept, the elements shown in the figures are well known and will not be described in detail. For example, GPUs, warps and thread blocks, etc., are well known and not described in detail herein.

As some background, the "coupling" by a ray between a pixel and a surface element means that the ray provides contributions to the image rendering at the pixel, as being originating from the surface element. Those contributions may be indirect, the rays being then secondary rather than primary. Also, the term "originating" here is to be understood in its physical and not computational meaning, insofar as the rays may be traced starting from the pixels rather than from the surface elements, in the frame of rendering.

In ray tracing, the computation processing circuits that are used may be multiple, and consist in processing cores of at least one GPU. Their number in each GPU may notably range from a few ones to several hundred (e.g., 300). In particularly appropriate embodiments of the device according to the present principles, the computation processing circuits are then exploited for parallel processing of the pixels, a high number of cores being particularly appropriate then.

In such embodiments, as will be familiar to a skilled person, threads are concurrently executing a same kernel in parallel in respective processing cores for respective pixels, each thread being dedicated to a pixel, and the threads are grouped into thread blocks (which can include various numbers of threads) sharing common cache memory. This cache memory is typically an L1 cache.

At a larger scale, thread blocks are grouped into thread grids or thread warps (which can include various numbers of blocks, and thus of threads), local memory data being commonly available to the threads in a same warp. A GPU may include itself several warps, thereby providing potentially as a whole a high number of threads.

For sake of pure illustration, a GPU in an illustrative embodiment comprises 24 multiprocessors each of which capable of concurrently executing 32 threads - which makes 768 threads in the GPU at a time. In another illustrative embodiment, the GPU comprises a unique warp of 512 threads - which amounts to 512 threads in the GPU at a time.

In particular embodiments involving GPUs, the latter comprises local memory for per-thread data, and shared memory, including cache memory, such as L1 and L2 caches, for low-latency access to data. The memory resources that are used may be available from any kind of appropriate storage means or devices, which can be notably a RAM (Random Access Memory) or an EEPROM (Electrically-Erasable Programmable Read-Only Memory) such as a Flash memory, possibly within an SSD (Solid-State Disk). According to particular characteristics, the L1 caches are respectively associated with blocks of threads, while L2 caches are respectively associated with warps. According to other characteristics, the L2 caches are globally available for the set of warps in a GPU.

By contrast, additional background memory resources are available external to the GPUs, such as notably in the form of one or several GRAM (Graphics Random Access Memory) - which may be available in a graphics card together with the GPUs. This is subject to higher-latency accesses via buses. The GRAM itself comprises for instance a set of DRAMs.

As such, the less access to GRAM and the better the locality of data with respect to the use of the L1 cache and L2 cache, the quicker the processing operations are for ray tracing. As is apparent from the following description, the graphics processing device in accordance with the present principles is able to offer such a major asset.

The ray data representative of ray directions, which are stored in the memory elements of a graphics processing device compliant with the present principles, may correspond to relative ray directions, with respect to the corresponding surface elements (which is, for each ray direction, the surface element from which the ray having the ray direction is originating, that ray coupling that surface element and the pixel associated with the considered memory element). More precisely, they may be for example represented by Cartesian coordinates within the unit disk on that surface element.

Namely, quite especially in global illumination techniques, the choice of a good sampling for the secondary ray directions is crucial to reduce the variance and obtained reduced noise images. Notably, Monte Carlo methods exploited in stochastic ray tracing use various distributions tending to a good sampling that is however subject to improvement or optimization, as it will appear in the following description. They take into account Lambert's law for perfect diffuse surfaces and energy lobe in reflection directions for specular surfaces. This leads to sampling distributions to which the following advantageous embodiments are particularly well adapted, though not being limited thereto.

The reference direction depends on the light interaction features of the surface element. In implementations: if the surface is dealt with as perfectly diffuse, the reference direction is given by a normal to the surface element; if the surface is dealt with as specular, the reference direction is given by a reflection direction of an incoming ray; if the surface is dealt with as refractive, the reference direction is given by a refraction direction of an incoming ray.

In particular, most of the sampling distribution resulting from associated Monte Carlo method is oriented towards the normal to the surface element (for diffusion) or the reflected ray (for specular reflection). The rays may be chosen and processed according to a ray tracing method according to embodiments described in the present disclosure, those rays being secondary rays corresponding to indirect illumination in rendering the image, and being spawned from scattering on the surface elements.

As described above, stochastic GPU ray tracing techniques commonly used to solve the rendering equation partition a camera image into a block of threads, where each thread computes the illumination of a pixel of the image by Monte Carlo integration. The Monte Carlo integration consists in tracing secondary rays distributed on an area, for example a square or a hemisphere, surrounding a point on a surface. However, parallel tracing of unorganized rays in a block of threads leads to severe cache misses due to scattered BVH data access. Since each ray/thread in a block can access a random space region, concurrent threads can't take advantage of prefetching (caching) due to random BVH node fetches. This situation represents a serious bottleneck with direct impact on rendering performances.

Therefore, and in accordance with the present principles, a novel approach is proposed to sample the area surrounding a point of the scene in a way to minimize GPU cache misses, for example for secondary rays. This approach is based on a per pixel restricted jittering of a unique stochastic sampling. The solution according to the present principles, as explained with more details hereinbelow, provides a better sampling distribution compared to other solutions, prevents the appearance of structured noise and drastically improves rendering performances by maintaining a good GPU cache coherency.

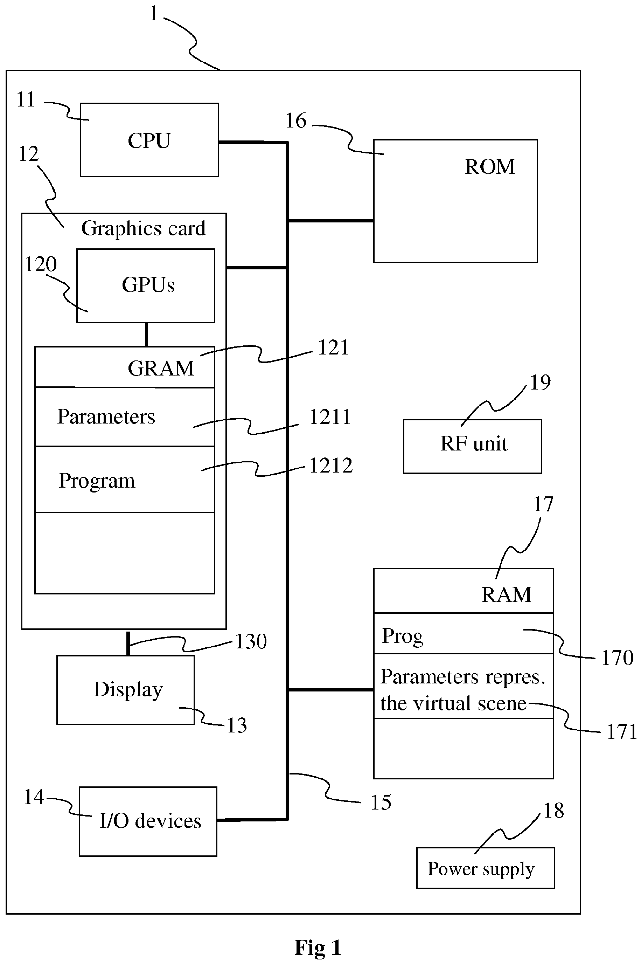

An illustrative apparatus for use in ray tracing in accordance with an embodiment of the present principles is shown in **figure 1.** The apparatus 1 corresponds for example to a personal computer (PC), a laptop, a tablet, a smartphone or a games console - especially specialized games consoles producing and displaying images live. The apparatus 1 comprises the following elements, connected to each other by a bus 15 of addresses and data that also transports a clock signal:

- a microprocessor 11 (or CPU);
- a graphics card 12 comprising: several Graphical Processor Units (or GPUs) 120;
- a Graphical Random Access Memory (GRAM) 121;
- a non-volatile memory of ROM (Read Only Memory) type 16;
- a Random Access Memory or RAM 17;
- one or several I/O (Input/Output) devices 14 such as for example a keyboard, a mouse, a joystick, a webcam; other modes for introduction of commands such as for example vocal recognition are also possible;
- a power source 18; and
- a communication unit 19 (for wired and/or wireless communications, e.g., to a local area network).

The apparatus 1 also comprises a display device 13 of display screen type directly connected to the graphics card 12 to display synthesized images calculated and composed in the graphics card, for example live. The use of a dedicated bus to connect the display device 13 to the graphics card 12 offers the advantage of having much greater data transmission bitrates and thus reducing the latency time for the displaying of images composed by the graphics card. According to a variant, a display device is external to the device 1 and is connected to the apparatus 1 by a cable or wirelessly for transmitting the display signals. The apparatus 1, for example the graphics card 12, comprises an interface for transmission or connection adapted to transmit a display signal to an external display means such as for example an LCD or plasma screen or a video-projector. In this respect, the communications unit 19 can be used for wireless transmissions.

When switched-on, the microprocessor 11 loads and executes the instructions of the program contained in the RAM 17. The random access memory 17 stores an operating program 170 of the microprocessor 11 responsible for switching on the apparatus 1, and also stores parameters 171 representative of the scene (for example modelling parameters of the object(s) of the scene, lighting parameters of the scene).

The program illustratively implementing the steps of the method specific to the present disclosure and described hereafter is stored in the memory GRAM 121 of the graphics card 12 associated with the apparatus 1. When switched on and once the parameters 171 representative of the environment are loaded into the RAM 17, the graphic processors 120 of the graphics card 12 load these parameters into the GRAM 121 and execute the instructions of these algorithms in the form of microprograms of "shader" type using HLSL (High Level Shader Language) language or GLSL (OpenGL Shading Language) for example.

The random access memory GRAM 121 illustratively stores parameters 1211 representative of the scene, and a program 1212 in accordance with the present principles, as described further below.

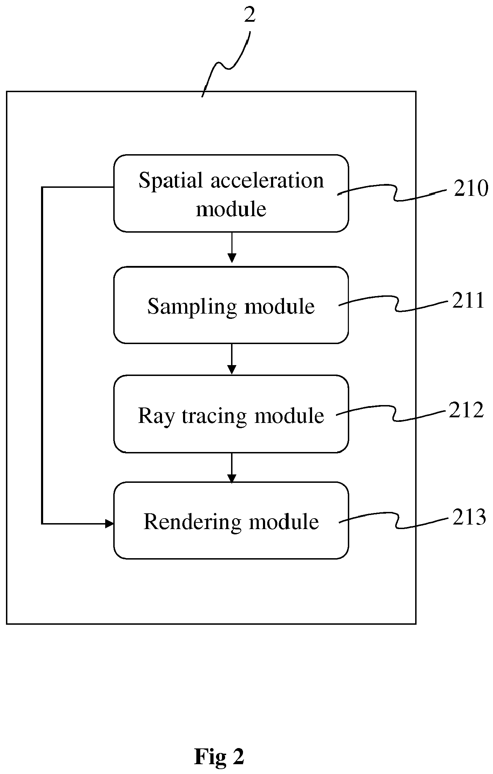

**Figure 2** shows some functional aspects specific to the graphics processing apparatus 1, according to a non-limiting example of the present principles. The represented blocks are purely functional entities, which do not necessarily correspond to physically separated units. In particular, they may be implemented in one or several integrated circuits within the GPUs 120.

The GPUs 120 may form a distributed GPU ray tracing system, involving GPU computing kernels, and possibly relying on parallel computing architecture such as notably CUDA (Compute Unified Device Architecture), OpenCL (Open Computing Language) or Compute Shaders.

One of the GPUs 120, numbered GPU 2, includes:

- a module 210 for spatial acceleration, such as BVH; alternatively, LBVH, BSP trees such as notably k-d trees, or Octrees structures are implemented, several spatial acceleration schemes being possibly available in same GPU 2;
- a module 211 for generating samples used to generate the rays for the ray tracing;
- a module 212 for ray tracing, yielding multiple rays having respective ray directions based on the samples generated in the module 211;
- a rendering module 213, proceeding with the final operations of performing ray intersections and adding light contributions scattered towards a viewing direction using Monte Carlo integration based on the rays generated in the module 212.

As will appear more clearly below, the relationships between the modules are mainly as follows: the sampling module 211 feeds the ray tracing module 212 with samples generated for each pixel of the image to be rendered, the ray tracing module 211 feeds the rendering module 213, so as to constitute an image pixel by pixel, through parallel computing. For ray tracing as well as for rendering, the spatial acceleration module 210 is exploited in relation with the hierarchical bounding of objects in the concerned scene.

Same functionalities can be implemented in the other GPUs 120 of the graphics processing apparatus 1, as well.

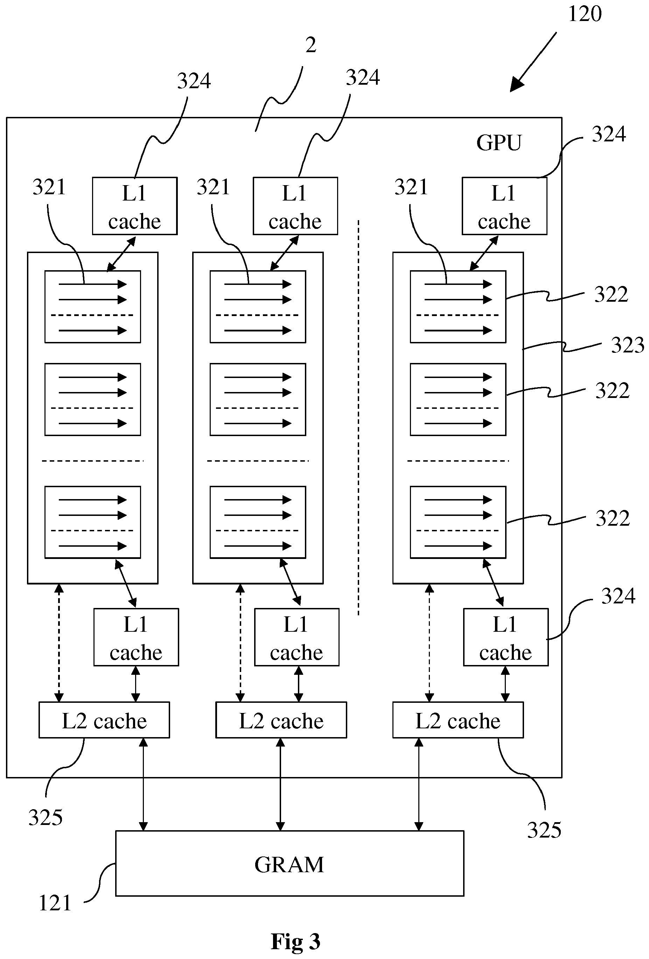

**Figure 3** shows the parallel mechanisms implemented in the GPU 2, according to a non-limiting example of the present principles. Blocks 322 of threads 321, respectively dedicated to pixels of an image and executed in parallel by a same kernel, are themselves grouped into warps or grids 323.

Each thread 321 is allotted a small local memory (not represented), while the threads 321 of a same block 322 are sharing a first-level cache memory or L1 cache 324. The warps 323 are themselves provided with second-level cache memories or L2 caches 325 through the L1 caches 324, which are communicating with the GRAM 321 via dedicated buses. The access to data contained in L2 caches 325 by the threads 321 across blocks 322 is slightly slower than their access to data in L1 caches 324. Both are however significantly faster than accesses to the GRAM 121.

The GPU 2 is working on the ground of SIMD parallel programming, by instantiating a kernel program on each of the warps 323, such as for instance a ray intersection. This makes the threads 321 execute concurrently this same kernel, which proves particularly well suited for ray-tracing applications.

When a thread 321 request data from a texture or a buffer not available in the L1 or L2 caches, the GPU 2 prefetches a cache block making local memory data available for other threads 321 in the same warp 323. In this respect, locality of data accessed by a group of threads 321 in a warp 323 is critical to good data bandwidth, while scattered data accesses affect performances.

Tracing secondary unorganized rays through the scenes is, as a general observation, a cause of severe cache misses due to random memory in the BVH, such cache misses being produced by incoherent BVH node fetches.

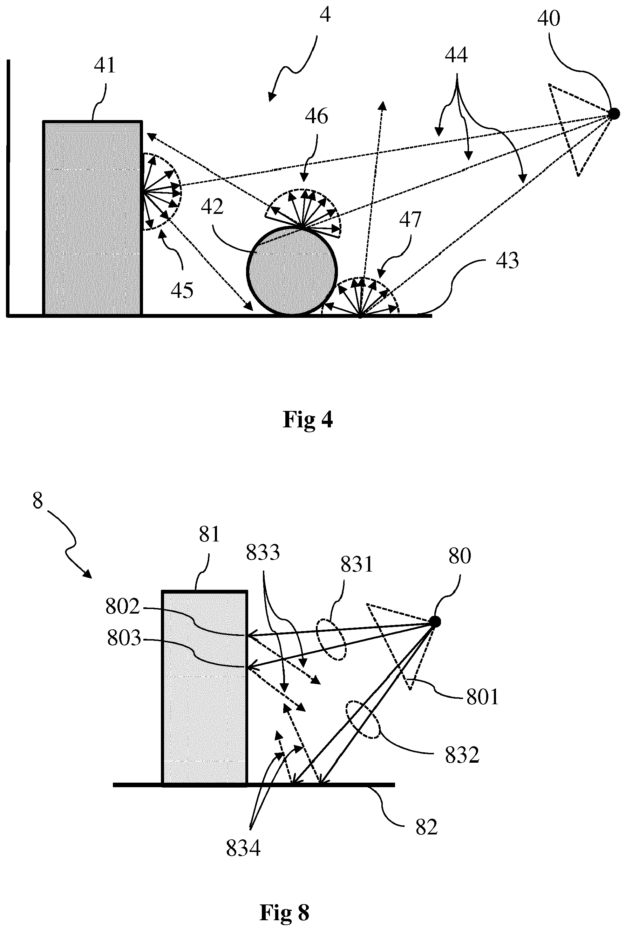

This hurdle, significantly alleviated thanks to the GPUs 2 of apparatus 1, is illustrated on **Figure 4,** which shows illustratively the scattering of primary rays in a scene 4. The latter is viewed from a point of view 40 (also called camera field of view) and corresponds for example to a virtual scene. The image to be rendered is associated with the point of view 40. The scene 4 comprises several virtual objects, i.e. a first object 41 and a second object 42, further to a ground surface 43 - also considered as an object from light interactions prospects. According to a variant, the scene 4 is a real scene shot by a camera device generating an image and advantageously one or more other images according to different points of view, as to generate a stereoscopic image of the scene.

The objects 41 and 42 are modelled according to any method known to those skilled in the art, for example by polygonal modelling, in which the model is assimilated with a set of polygons (mesh elements) each defined by the list of summits and edges that compose it, by NURBS (Non uniform rational basic spline) type curve modelling in which the model is defined by a set of curves created via control vertices, by modelling by subdivision of surfaces. By virtual object is understood any virtual representation (obtained by modelling) of an object (real or fictitious) composing a real environment / real scene (for example the ground, a house or a house front, a person, a car, a tree, that is to say any element composing an environment such as a part of a house, a street, a town, the countryside, etc.) or an imaginary element.

Each object 41, 42, 43 of the scene 4 is specified by a surface covering it, the surface of each object having scattering features, which can include reflectance properties (corresponding to the proportion of incident light reflected by the surface in one or several directions) and transmittance properties (corresponding to the proportion of incident light transmitted by the surface in one or several directions). The reflectance properties are considered in a broad sense, as encompassing subsurface scattering phenomena (in which light penetrates the surface, is scattered by interacting with the material and exits the surface at a different point).

The present embodiments are focused on reflections, but in other implementations, transmittance is processed alternatively or in combination, the graphics processing apparatus 1 having preferably capacities for both kinds of light interactions with surfaces.

Primary rays 44 coupling the point of view 40 and the surfaces of the objects 41, 42, 43 are rays having potentially a lighting contribution to an image corresponding to this point of view 40. One primary ray is for example associated with one pixel of the image to be rendered and associated with the point of view 40. For ray tracing, the primary rays 40 are usually processed as originating from the point of view 40 for merely sake of convenient processing, though the contrary is true in the reality - so that the rays 44 are in fact originating from the objects. The rays 44 incoming on the surfaces of the objects 41, 42, 43 are broadly scattered in various directions, leading to incoherent secondary rays, respectively 45, 46 and 47 for objects 41, 42 and 43, respectively. The generation of the incoherent secondary rays leads to cache misses and degrades the rendering performances.

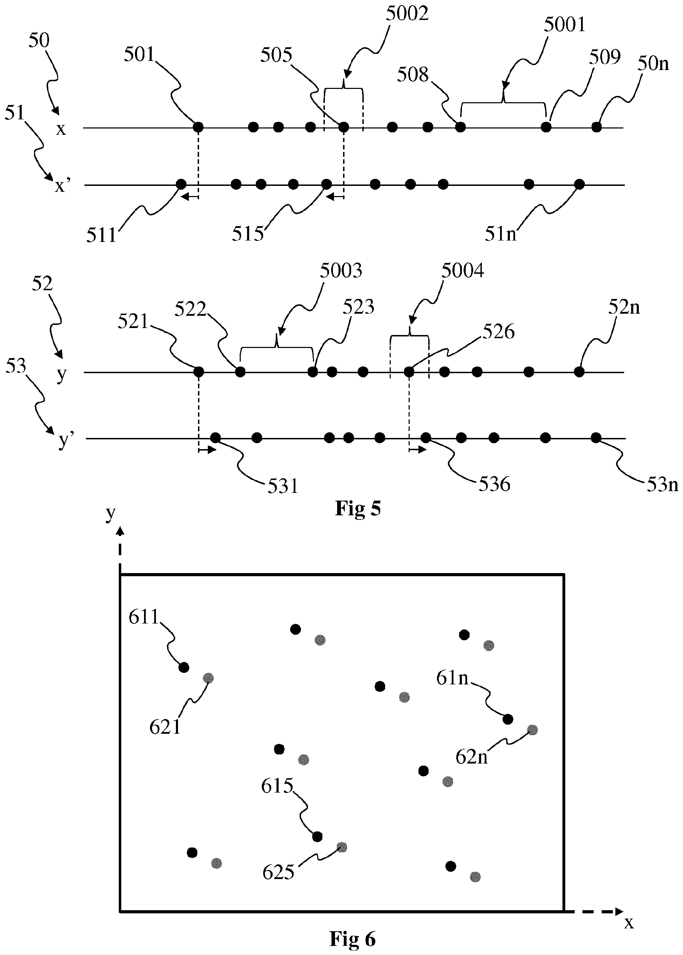

**Figures 5, 6 and 7** show the generation of samples for the tracing of rays in a scene, to overcome the issues related with the incoherent secondary rays, according to a particular and non-limiting embodiment of the present principles. The example of figures 5, 6 and 7 is based on an integration space having two dimensions. Naturally, the number of dimensions is not limited to two but may extend to any number, for example 1, 2, 3, 4, 5, 10 or more.

**Figure 6** illustrates a first sequence of n first samples 611, 615, 61 n and a second sequence of n second samples 621, 625, 62n, n being an integer greater than or equal to 2. n is equal to 10 in the illustrative example of figure 6 but n is naturally not limited to 10 but extends to any number, for example 300, 500, 1000. The first samples are illustrated with black dots and the second samples with grey dots. The second samples 621, 625, 62n are obtained by applying a shift to the first samples 611, 615, 61 n respectively. The first samples, and consequently the second samples, are generated in such a way to cover the entire domain for each dimension x and y. The first samples are for example obtained by generating a low-discrepancy sequence for each dimension of the domain of interest. A low-discrepancy sequence is for example described on the Internet at: https://en.wikipedia.org/wiki/Low-discrepancy_sequence. The method used for obtain a low-discrepancy sequence is for example the Halton method, the Hammersley method, the Sobol method or the Faure method. According to a variant, the first samples are obtained by generating a sequence of uniformly distributed random numbers for each dimension. In the example of figure 6, two low-discrepancy sequences are generated, one for the x dimension and one for the y dimension, as illustrated on Figure 5.

**Figure 5** shows sequences 50 to 54 of numbers generated to obtain the first sequence of first samples and the second sequence of second samples. Two sequences 50, 52 are generated to obtain the first samples and two other sequences 51, 53 are generated to obtain the second samples, the latter two sequences 51, 53 being obtained from the two sequences 50, 52 used to obtain the first samples. Each sequence 50, 52 comprises n samples, for example 10 samples in the example of figure 5. The n samples of each sequence 50, 52 are generated to cover the entire domain of interest, the n samples being distributed within an interval, for example the interval [0, 1], to have a low discrepancy.

The discrepancy $D_N$ for a sequence with N samples $\{s_1, s_2, s_3, ...\}$ with respect to the interval [a, b] is defined with:

$$D_N = \sup_{a \le c \le d \le b} \left| \frac{|\{s_1, ..., s_N\} \cap [c, d]|}{N} - \frac{d - c}{b - a} \right|$$

A sequence is thus equi-distributed if the discrepancy $D_N$ tends to zero as N tends to infinity. A low-discrepancy sequence is a sequence with $D_N$ small, i.e. with $D_N \le \varepsilon$, with $\varepsilon$ being a determined value or a threshold, $\varepsilon$ being close to 0, $\varepsilon$ being for example equal to 0.001, 0.005, 0.02, depending from tne number N of samples. The star-discrepancy D*N corresponds to the maximum discrepancy on all possible subset [c,d] within [a,b]. In other words, the discrepancy may be defined as a measure of the deviation of a point set (or of a sequence of samples) from a uniform distribution.

The sequence 50 corresponds to the x dimension and the sequence 52 to the y dimension, the samples 501, 505, 508, 509 and 50n of the sequence 50 each corresponding for example to one first coordinate (e.g. the abscissa along the x axis) of one first sample respectively and the samples 521, 522, 523, 526, 52n of the sequence 52 each corresponding for example to one second coordinate (e.g. the ordinate along the y axis) of one first sample respectively. For example, the abscissa of the first sample 615 along the x axis corresponds to the sample 505 of the sequence 50 and the ordinate of the first sample 615 along the y axis corresponds to the sample 522 of the sequence 52.

The sequence 51 corresponds to the x dimension (called x') and the sequence 53 to the y dimension (called y'), the samples 511, 515, 51 n, of the sequence 51 each corresponding for example to one first coordinate (e.g. the abscissa along the x axis) of one second sample respectively and the samples 531, 536, 53n of the sequence 53 each corresponding for example to one second coordinate (e.g. the ordinate along the y axis) of one second sample respectively.

The samples 511, 515, 51n of the sequence 51 are obtained by applying a first shift value (or first jitter value) to the samples 501, 505, 50n, respectively, of the sequence 50. The samples 531, 536, 53n of the sequence 53 are obtained by applying a second shift value (or second jitter value) to the samples 521, 526, 52n, respectively, of the sequence 52. The first shift value is for example different from the second shift value. The same sequence 50 and the same sequence 52 are used for each pixel of a part or of the whole image to render (i.e. the image associated with the point of view 40 in the figure 4). The first shift value varies from one pixel to another one, even if two same first shift value may be used for two or more pixels of the image. The second shift value varies from one pixel to another one, even if two same second shift value may be used for two or more pixels of the image.

The first shift value may be obtained as a selection of a value within an interval of value 5002 that is a function of a parameter K representative of the star-discrepancy of the sequence 50. The parameter K is for example the maximum distance between two samples of the one-dimensional sequence 50, for example the distance 'd$_0$' referenced 5001 between the samples 508 and 509. K≈1.2 for a Hammersley sequence, K≈2.5 for the two first dimensions of Halton. The interval 5002 corresponds for example to [-p, +p] with 'p' being obtained with:

$$p = K(D_N^*) \sqrt[s]{\frac{1}{N}}$$

P may correspond to a dimension (side) of an hypercube having 's' dimension(s), in which random shifts are performed. For a one-dimensional sequence, s=1. For a two-dimensional sequence (e.g. sequences 50 and 51), s=2. The first shift value is for example selected randomly within the interval [-p, +p] or according to a determined function within [-p, +p], the function being determined in such a way that each first shift value is different from a pixel to another one in the image or at least in a block of pixels of the image. Samples of the sequence 51 are obtained by shifting the samples of the sequence 50 of the first shift value, i.e. the same first shift value is applied to the samples of the sequence 50. For example, the sample 511 is obtained by shifting the sample 501 of the first shift value, the sample 515 is obtained by shifting the sample 505 of the first shift value and the sample 51 n is obtained by shifting the sample 50n of the first shift value.

In a same way, the second shift value may be obtained as a selection of a value within an interval of value 5004 that is a function of a parameter representative of the discrepancy of the two-dimensional sequence 50 and 52. The interval 5004 corresponds for example to [-p, +p] with 'p' being obtained with:

$$p = K(D_N^*) \sqrt[2]{\frac{1}{N}}$$

The second shift value is for example selected randomly within the interval [-p, +p] or according to a determined function within [-p, +p], the function being determined in such a way that each second shift value is different from a pixel to another one in the image or at least in a block of pixels of the image. Samples of the sequence 53 are obtained by shifting the samples of the sequence 52 of the second shift value, i.e. the same second shift value is applied to the samples of the sequence 52. For example, the sample 531 is obtained by shifting the sample 521 of the second shift value, the sample 536 is obtained by shifting the sample 526 of the second shift value and the sample 53n is obtained by shifting the sample 52n of the second shift value.

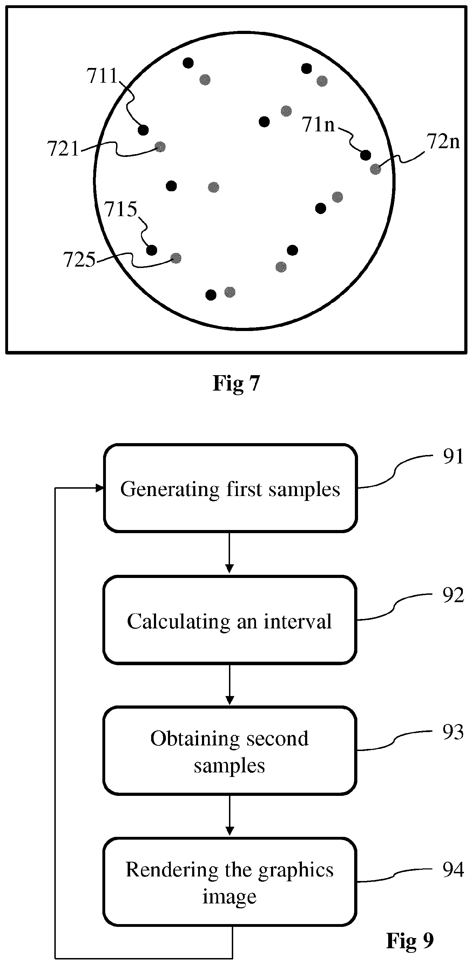

**Figure 7** shows the projection of the first and second sequences of samples onto a disk that corresponds to the integration domain for a point of the scene, according to a non-limiting example of the present principles. The projection leads to a distribution of the first and second samples that covers the whole integration domain. The projected first samples are illustrated with black dots 711, 715, 71 n and the projected second samples 721, 725 and 72n are illustrated with grey dots. The integration domain corresponding to the disk corresponds for example to the area surrounding a point of the scene for which the associated lighting value is to be computed. Rays originating from said point and each passing through one second samples are traced to compute the lighting value, for example by applying Monte Carlo integration using the second samples associated with the point.

**Figure 8** shows the effect of the use of the sampling method described with regard to figures 5, 6 and 7, according to a particular and non-limiting example of the present principles. Figure 8 shows for example a part 8 of the scene 4, the object 81 corresponding for example to the object 41 and the object 82 to the object 43. An image 801 to be rendered is associated with a point of view 80, the image 801 being formed of an array of pixels. Path tracing is performed to compute the amount of light associated with the pixels of the image 801. Primary rays 831, 832 are traced, the primary rays 831, 832 originating from the point of view 80, each primary ray passing through one different pixel of the image 801 and intersecting with one of the object 81, 82 of the scene. For example, the primary rays 831 hit a same surface of the object 81, the primary rays 831 being reflected/scattered by the surface to form secondary rays 833 (only a part of the secondary rays being illustrated on figure 8). In a same way, the primary rays 832 hit the surface of the object 82, the primary rays 832 being reflected/scattered by the surface to form secondary rays 834 (only a part of the secondary rays 834 being illustrated on figure 8). As can be seen on figure 8, the secondary rays point roughly in the same directions when corresponding to same or neighbouring surface element. This results in significantly reducing cache misses at the very first traversal of the BVH while avoiding the structuration of the noise. The second samples are used to generate the secondary rays associated with a surface element of an object of the scene 8 intersected by a primary ray. As the second samples are obtained from a first sequence of first samples that is identical for each pixel of the image 801 (or at least for each pixel of a part of the image 801, for example of a block of pixels of the image 801), the set of directions of the secondary rays associated with a given pixel of the image 801 is roughly the same as the set of directions of the secondary rays associated with another pixel of the image 801 (or at least with another pixel of the block comprising the given pixel), the difference between the two sets of secondary rays being due to the different shift applied to the first sequence of first samples to obtain the second sequence of second samples used to generate the secondary rays.

Using a same first sequence of first samples for the pixels of the image 801 (or for the pixels of a block of neighbouring pixels of the images 801) enables to obtain similar set of secondary rays, thus enabling to reduce cache misses at the very first traversal of the BVH. Applying a different shift to the first sequence of first samples from a pixel to another pixel enables to prevent that the noise due to the sampling be structured, the set of secondary rays associated with a given pixel being slightly different from the set of secondary rays associated with another pixel, the difference being obtained by the difference of the shift between the given pixel and the another pixel (the difference of the shift being limited to the interval used to select the shift values).

**Figure 9** shows a method of rendering a graphics image executed by the graphics processing apparatus 1, coupled upstream and downstream with spatial acceleration operations (such as with BVH), according to a particular and non-limiting embodiment of the present principles.

In a step 91, a first sequence of n first samples is generated, n ≥ 2. The first sequence is for example a low-discrepancy sequence or a random sequence. The first sequence is associated with each pixel of the image to be rendered or with at least each pixel of a part of the image, for example of a block of neighbouring pixels of the image. The first sequence has one or more dimensions. When the first sequence has two or more dimensions, the first sequence is obtained from a sequence of n samples for each dimension, the sequences being for example different, i.e. the sequence associated with a given dimension being different from a sequence associated with another dimension, as described with regard to figure 5. The sequence are different in the sense that the values, belonging to an interval of determined values, for example [0, 1], associated with the samples may be different from a sequence to another one.

In an optional step 92, an interval is calculated as a function of a parameter representative of the discrepancy of the first sequence. When the first sequence has a determined number of dimensions, the interval has the same determined number of dimensions. The range of values comprised in each dimension of the interval may be different and may be calculated independently for each dimension, as explained with regard to figure 5. The parameter representative of the discrepancy may be a vector having the same determined number of dimensions as the first sequence. Each dimension value of the parameter may be calculated for each sequence (used to obtain the first sequence) associated with each dimension of the first sequence.

According to a variant, the interval is obtained from a memory or from a remote storage device (e.g. a server) or from the cloud.

In a step 93, a shift is applied to the first samples of the first sequence to obtain a second sequence of second samples, for each pixel of the image to be rendered or for each pixel of the part of the image (e.g. for each pixel of the block of neighbouring pixels). The shift is a vector having the same determined number of dimensions as the first sequence. The value associated with each dimension of the shift is selected in the interval of values calculated for each dimension of the interval computed at step 92, i.e. for each dimension of the first sequence. The shift values associated with each dimension are for example different. The shifts applied to the first sequence to obtain the second sequence are different from a pixel to another one, at least for a part of the pixels. The shifts applied to the first sequence of first samples are not the same for each and every pixel of the image (or of the part of the image), even if a same shift may be applied to different pixels of the image (or of the part of the image). Applying different shift to a first sequence of first samples common to all pixels of the image (or of the part of the image) enables to reduce cache misses while avoiding to have a structured noise in the image. A structured noise refers to non-random variations or disturbing patterns in an image. A structured noise may be for example periodic and stationary, i.e. the noise has a fixed amplitude, frequency and phase; or periodic and non-stationary, i.e. the noise parameters (amplitude, frequency, and phase) may vary across the image, from a block of the image to another block.

In a step 94, the graphics image is rendered by using the second samples, for example by implementing the Monte Carlo integration using the second sequences of second samples obtained for each pixel of the graphics image. The rendering may for example comprise calculating an illumination value (or lighting value corresponding to the amount of light perceived by a pixel) for each pixel by tracing rays originating said each pixel and passing through the second samples (and the scene) obtained for each said pixel.

According to a variant, the first sequence of first samples is ordered following a space filling curve, for example according to the Morton code method, the Hilbert R-trees method or Moore curves method. Applying space filling curve to obtain the first sequence further reduces GPU cache misses by providing the maximum efficiency for the parallel processing of memory coherent data.

Naturally, the present disclosure is not limited to the embodiments previously described.

In particular, the present disclosure is not limited to a method of rendering a graphics image but also extends to a method/apparatus for displaying the graphics image on a display device such as a LCD screen or an OLED screen for example. The present disclosure also extends to any device comprising one or more processors configured to implement the method, for example a telecommunication device.

Telecommunication devices includes, for example, smartphones, smartwatches, tablets, computers, mobile phones, portable/personal digital assistants ("PDAs"), see-through glasses, Head-Mounted Display (HMD) and other devices that facilitate communication of information between end-users but also set-top-boxes.

The method of rendering the graphics image described herein may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method of rendering a graphics image comprising a plurality of pixels, the method comprising:

   - generating (91) a first sequence of first samples, said first sequence being identical for each pixel of a set of pixels of said graphics image;
   - for said each pixel, applying (93) a shift to said first samples to obtain a second sequence of second samples, the shift being selected in an interval that is a function of a parameter representative of discrepancy of said first sequence, said shift being different for at least a part of the pixels of said set;
   - rendering (94) said graphics image by using said second samples.

2. The method according to claim 1, wherein said rendering comprises calculating an illumination value for said each pixel by tracing rays originating said each pixel and passing through said second samples associated with said each pixel.

3. The method according to claim 2, wherein said first samples have a plurality of dimensions comprising a first dimension and at least one second dimension, said shift having said plurality of dimensions, a first shift value according to the first dimension and at least one second shift value according to the at least one second dimension, the first shift value being different from the at least one second shift value.

4. The method according to claim 3, wherein the number of dimensions is equal to a number of dimensions of an integration domain used to calculate said illumination value.

**5.** The method according to one of claims 2 to 4, wherein said interval is calculated by performing a path-tracing algorithm implementing the Monte-Carlo integration method.

**6.** The method according to one of claims 1 to 5, further comprising applying a space filling curve ordering to said first samples.

**7.** An apparatus for rendering a graphics image comprising a plurality of pixels, the apparatus comprising at least one processor associated with a memory configured to:

- generate a first sequence of first samples, said first sequence being identical for each pixel of a set of pixels of said graphics image;
- for said each pixel, apply a shift to said first samples to obtain a second sequence of second samples, the shift being selected in an interval that is a function of a parameter representative of discrepancy of said first sequence, said shift being different for at least a part of the pixels of said set;
- render said graphics image by using said second samples.

**8.** The apparatus according to claim 7, wherein said at least one processor is further configured to calculate an illumination value for said each pixel by tracing rays originating said each pixel and passing through said second samples associated with said each pixel.

**9.** The apparatus according to claim 8, wherein said first samples have a plurality of dimensions comprising a first dimension and at least one second dimension, said shift having said plurality of dimensions, a first shift value according to the first dimension and at least one second shift value according to the at least one second dimension, the first shift value being different from the at least one second shift value.

**10.** The apparatus according to claim 9, wherein the number of dimensions is equal to a number of dimensions of an integration domain used to calculate said illumination value.

**11.** The apparatus according to one of claims 8 to 10, wherein said at least one processor is further configured to execute a path-tracing algorithm implementing the Monte-Carlo integration method.

**12.** The apparatus according to one of claims 7 to 11, wherein said at least one processor is further configured to perform a space filling curve ordering to said first samples.

**13.** A computer program product comprising instructions of program code for executing the method according to any one of claims 1 to 6, when said program is executed on a computer.

**14.** A non-transitory processor readable medium having stored therein instructions for causing a processor to perform the operations of the method according to any one of claims 1 to 6.

**Fig 1**

**Fig 2**

**Fig 3**

**Fig 4**

**Fig 8**

Fig 5

Fig 6

**Fig 7**

Generating first samples — 91

Calculating an interval — 92

Obtaining second samples — 93

Rendering the graphics image — 94

**Fig 9**

Europäisches
Patentamt

European
Patent Office

Office européen
des brevets

## EUROPEAN SEARCH REPORT

Application Number

EP 17 15 4668

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Andrew Kensler: "correlated multi-jittered sampling", , 5 March 2013 (2013-03-05), pages 1-8, XP002771058, Retrieved from the Internet: URL:https://graphics.pixar.com/library/MultiJitteredSampling/paper.pdf [retrieved on 2017-06-13] * abstract * * figure 3 * * section "Multi-Jittered Sampling" * ----- | 1-14 | INV. G06T15/06 |
| A | US 2005/275653 A1 (KELLER ALEXANDER [DE]) 15 December 2005 (2005-12-15) * abstract * ----- | 1-14 | |
| A,P | US 2017/032566 A1 (WAECHTER CARSTEN [DE] ET AL) 2 February 2017 (2017-02-02) * abstract * ----- | 1-14 | |
| | | | **TECHNICAL FIELDS SEARCHED (IPC)** G06T |

The present search report has been drawn up for all claims

| Place of search | Date of completion of the search | Examiner |
|---|---|---|
| Berlin | 13 June 2017 | dos Santos, Luís |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

18

## ANNEX TO THE EUROPEAN SEARCH REPORT
## ON EUROPEAN PATENT APPLICATION NO.

EP 17 15 4668

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2017

| Patent document cited in search report | Publication date | Patent family member(s) | | Publication date |
|---|---|---|---|---|
| US 2005275653 A1 | 15-12-2005 | US | 2005275653 A1 | 15-12-2005 |
|  |  | US | 2007165046 A1 | 19-07-2007 |
|  |  | US | 2009122063 A1 | 14-05-2009 |
| US 2017032566 A1 | 02-02-2017 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **K. J. T.** The Rendering Equation. *ACM SIGGRAPH Computer Graphics,* 1986

- **H. W. JENSEN.** Global Illumination using Photon Maps. *Proceedings of the Seventh Eurographics Workshop on Rendering,* 1996, 21-30